# FASCICULE DE BREVET EUROPEEN

(11) **EP 1 986 071 B1**
(45) Date de publication et mention de la délivrance du brevet: **21.10.2015**
(21) Numéro de dépôt: 08103436.5
(22) Date de dépôt: 08.04.2008
(51) Int. Cl.: G06F 1/14

(54) **Système et méthode pour gérer le temps dans un équipement d'automatisme**
System und Verfahren zur Zeitverwaltung in einer Automatisierungsvorrichtung
System and method for managing time in automatic control equipment

(30) Priorité: 24.04.2007 FR 0754652
(43) Date de publication de la demande: 29.10.2008
(73) Titulaire: Schneider Electric Industries SAS, 92500 Rueil-Malmaison (FR)
(72) Inventeur: Ianni, Giovanni, 06580, PEGOMAS (FR); Piacibello, Jacques, 06600, ANTIBES (FR)
(74) Mandataire: Bié, Nicolas

(56) Documents cités:
- WO-A-01/90865
- FR-A- 2 767 935
- JP-A- 55 115 120
- US-A1- 2004 205 368
- US-B1- 6 603 365

## Description

La présente invention se rapporte à une méthode et un système pour gérer le temps dans un équipement d'automatisme.

Un équipement d'automatisme désigne ci-après un automate programmable, une station de contrôle/commande, une commande numérique, ou tout module d'automatisme pouvant contenir et exécuter un programme application permettant de faire le contrôle/commande d'une application d'automatisme, comme notamment un variateur de vitesse ou un module logique.

Un équipement d'automatisme comporte une unité centrale (UC) et au moins un module d'entrées-sorties assurant la liaison entre l'unité centrale et des capteurs et préactionneurs de l'application d'automatisme à commander.

Habituellement, un équipement d'automatisme tel qu'un automate programmable est de construction modulaire, c'est-à-dire qu'il est composé de plusieurs modules qui communiquent entre eux par un bus fond de panier. Un automate programmable comporte typiquement :
- un module d'alimentation chargé de fournir aux autres modules les différentes tensions par le bus fond de panier,
- un rack permettant de fixer mécaniquement les modules et supportant le bus fond de panier sur lequel viennent se connecter électriquement les modules,
- un module unité centrale qui comporte un microprocesseur et des moyens de mémorisation stockant un programme constructeur ("firmware") exprimé dans un langage spécifique au constructeur de l'équipement d'automatisme, un programme application (appelé également programme utilisateur) chargé de réaliser le contrôle et/ou la commande d'une application d'automatisme ou d'une partie d'une application d'automatisme au moyen des entrées/sorties pilotées par le programme application, des données, en particulier les images des états des modules d'entrées-sorties.
- plusieurs modules entrées/sorties de divers types en fonction du processus à commander,
- un ou plusieurs modules de communication vers des réseaux de communication (Ethernet,...) ou des interfaces de commande telles que écran, clavier...

Afin de gérer et synchroniser les différentes tâches d'automatisme, l'unité centrale de l'équipement d'automatisme comporte une horloge. Dans l'art antérieur, cette horloge est un composant matériel RTC ("Real Time Clock") classique auquel accède le microprocesseur pour gérer le temps dans l'équipement d'automatisme. Lors d'une interruption de courant, une pile permet de maintenir la gestion du temps pendant la durée de l'interruption. Cependant, ce type de gestion du temps présente certains inconvénients listés ci-dessous :
- le composant matériel RTC étant externe, son accession est particulièrement lente,
- Les composants RTC standards sont limités a une seconde de résolution. L'emploi d'un composant RTC ayant une résolution inférieure à la seconde conduirait a une consommation plus élevée et engendrerait un coût supérieur.
- Les objets liés au temps gérés par le programme constructeur (par exemple un temporisateur) ne sont pas synchronisés avec le composant matériel RTC.

Dans le brevet US 6,603,365, il a notamment été proposé de remplacer la pile par une capacité. Cependant, l'inconvénient lié à la lenteur d'accession n'a pas été résolu.

Le document WO 01/90865 décrit une méthode de synchronisation de temps dans un système informatique distribué. Ce système comporte un module central et plusieurs modules distribués reliés au module central à travers deux bus de transmission. Le module central et les modules distribués comprennent chacun un composant RTC incluant l'année, le mois, le jour, l'heure, la minute et la seconde et plusieurs compteurs de temps ayant une résolution plus fine allant jusqu'à la microseconde pour dater de manière précise chaque événement. La synchronisation entre le module central et les modules distribués est réalisée en envoyant du module central aux modules distribués une commande de synchronisation accompagnée de l'heure de synchronisation. Ensuite, le module central peut envoyer une commande d'exécution aux modules distribués pour effectuer la synchronisation qui consiste alors à mettre à jour leur composant RTC à l'aide de l'heure commune reçue et à initialiser à zéro leurs compteurs. Si le module central et les modules distribués sont occupés, les compteurs de temps à haute résolution des modules peuvent toujours être employés car ceux-ci sont synchronisés dés la réception de la commande d'exécution.

Ce type de solution permet de dater des événements de manière précise lorsque le composant RTC présente une résolution insuffisante. Elle permet également de synchroniser les composants RTC même lorsque le module central et les modules distribués sont occupés. Cependant, cette solution ne permet pas de resynchroniser les horloges après une coupure de l'alimentation électrique.

Le but de l'invention est de proposer une méthode et un système pour gérer le temps dans un équipement d'automatisme dans lesquels les interruptions de courant sont maîtrisées sans aucun dommage et dans lesquels l'information du temps est cohérente, présente une résolution suffisante et peut être récupérée rapidement.

Ce but est atteint par une méthode de gestion du temps mise en oeuvre dans un équipement d'automatisme tel que définie par la revendication 1.

Selon une particularité, la première horloge est un composant matériel de type RTC.

Selon une autre particularité, la première base de temps est la seconde.

Selon une autre particularité, la seconde horloge est incrémentée par logiciel.

Selon une autre particularité, la troisième base de temps est la milliseconde.

Selon une autre particularité, l'alimentation électrique auxiliaire est une capacité.

Selon une autre particularité, la synchronisation périodique est réalisée sur la base du second compteur de la seconde horloge.

L'invention concerne également un système de gestion du temps dans un équipement d'automatisme, ce système étant défini par la revendication 8.

Selon l'invention, la première horloge est par exemple un composant matériel RTC à faible coût disposant d'une base de temps peu précise. La base de temps du composant matériel RTC employé dans l'invention est par exemple la seconde alors que la base de temps de la seconde horloge est plus faible et est par exemple constituée de la milliseconde. Selon l'invention, lors du redémarrage après une coupure de l'alimentation électrique principale, les données de la première horloge ne sont pas suffisantes pour resynchroniser parfaitement la seconde horloge. Il est donc nécessaire de détecter la modification du premier compteur de la première horloge pour écrire les compteurs de la première horloge dans la seconde horloge et pour initialiser à zéro tous les compteurs de la seconde horloge qui ont une base de temps inférieure non gérée par la première horloge.

Selon l'invention, la synchronisation périodique des deux horloges est réalisée en fonctionnement normal pour éviter une dérive trop importante de l'une des horloges par rapport à l'autre. En effet, après une coupure de l'alimentation principale et la resynchronisation de la seconde horloge à l'aide de la première horloge, il est nécessaire d'éviter que les compteurs de la seconde horloge puissent prendre des valeurs inférieures à celles qu'ils avaient avant la coupure et générer ainsi une incohérence dans la gestion du temps.

D'autres caractéristiques et avantages vont apparaître dans la description détaillée qui suit en se référant à un mode de réalisation donné à titre d'exemple et représenté par les dessins annexés sur lesquels :

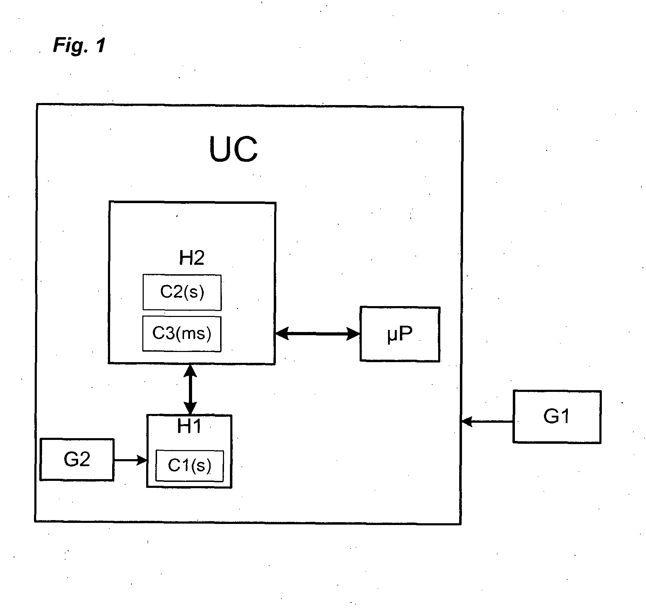

- la figure 1 représente le système de gestion du temps mis en oeuvre dans un équipement d'automatisme.

Un équipement d'automatisme est bien connu de l'art antérieur et son fonctionnement ne sera pas détaillé dans la présente demande.

Un équipement d'automatisme tel qu'un automate programmable dispose dans son unité centrale UC d'un système de gestion du temps lui permettant à l'aide notamment de son microprocesseur µP de synchroniser ses tâches et de gérer les coupures d'alimentation sans dommage et sans affecter le fonctionnement de l'équipement lors de son redémarrage après coupure.

Le système comporte une alimentation électrique principale G1 et une alimentation électrique auxiliaire G2, composée par exemple d'une capacité, destinée à maintenir la gestion du temps dans l'équipement d'automatisme lorsque l'alimentation électrique principale G1 est interrompue. L'alimentation électrique principale G1 est par exemple celle de l'automate programmable alimentant les modules de l'automate par le bus fond de panier.

Selon l'invention, le système de gestion du temps comporte donc une première horloge H1 constituée d'un composant matériel de type RTC ("Real Time Clock"). Cette première horloge H1 est gérée grâce à un quartz et comporte plusieurs compteurs fonctionnant suivant différentes bases de temps. Chaque compteur de cette première horloge est par exemple codé sous forme binaire (BCD pour "Binary-Coded Decimal"). La base de temps la plus faible des compteurs est par exemple la seconde. Les autres compteurs ont des bases de temps plus élevées telles que la minute, l'heure, le jour, le mois et l'année.

Le système de gestion du temps comporte également une seconde horloge H2 incrémentée par logiciel et implémentée dans le programme constructeur P de l'équipement d'automatisme. Cette seconde horloge H2 consiste en une interruption périodique suivant laquelle l'équipement d'automatisme gère et synchronise ses tâches définies dans son programme application. L'interruption périodique est générée à l'aide d'un quartz. Cette interruption périodique est par exemple de une milliseconde. A partir de cette interruption périodique, le programme constructeur P gère plusieurs compteurs fonctionnant suivant différentes bases de temps. Un compteur C2, par exemple codé sur 32 bits, présente une base de temps à la seconde et un autre compteur C3, par exemple codé sur 16 bits, présente une base de temps à la milliseconde. Ces deux compteurs C2, C3 sont employés pour déterminer la date et l'heure utilisées dans le programme application ou pour dater des événements avec une résolution de une milliseconde.

En fonctionnement normal, les deux horloges H1, H2 sont alimentées par l'alimentation électrique principale G1. Lors d'une coupure de l'alimentation électrique principale G1, l'alimentation électrique auxiliaire G2 prend le relais pour alimenter uniquement la première horloge H1.

Les quartz de la première horloge H1 et de la seconde horloge H2 ne sont pas exactement synchrones et dérivent tous les deux. Par conséquent, en fonctionnement normal, il est nécessaire de synchroniser périodiquement les deux horloges H1, H2 afin de les rendre cohérentes entre elles. La première horloge H1 est ainsi synchronisée périodiquement avec la seconde horloge H2 qui constitue donc la référence. Pour cela, étant donné que la base de temps commune la plus faible entre les deux horloges H1, H2 est la seconde, on compare les deux valeurs des compteurs seconde C1, C2 de la première horloge H1 et de la seconde horloge H2. Pour être sûr que les deux horloges H1, H2 sont toutes les deux dans la même minute au moment de la comparaison, la comparaison est pratiquée lorsque le compteur seconde C1, C2 de la première ou seconde horloge est à 30. En fait, il s'agit surtout d'éviter de faire la comparaison lorsque les compteurs ont des valeurs proches de 0 ou 59. Lors de la comparaison, si les compteurs seconde C1, C2 sont différents, la valeur du compteur seconde C1 de la première horloge H1 est écrasée avec la valeur du compteur seconde C2 de la seconde horloge H2. La durée d'écriture de la seconde horloge H2 dans la première horloge H1 est considérée comme négligeable.

Lors d'une coupure de l'alimentation électrique principale, seule la première horloge H1 est maintenue sous tension grâce à l'alimentation électrique auxiliaire G2. Les données de la seconde horloge H2 sont donc perdues. Après la fin de la coupure d'alimentation électrique principale G1, il est donc nécessaire de resynchroniser la seconde horloge H2 à l'aide de la première horloge H1. Pour cela, lors de la reprise de l'alimentation électrique principale G1, il s'agit de détecter le prochain changement du compteur ayant la plus faible base de temps dans la première horloge H1 (dans ce cas, il s'agit du compteur seconde C1) puis au moment de cette détection :
- les valeurs de tous les compteurs de la première horloge H1 sont écrites dans les compteurs correspondants de la seconde horloge H2 et,
- tous les compteurs de la seconde horloge H2 ayant une base de temps inférieure à la base de temps de la première horloge, sont initialisés à zéro. Le compteur C3 de la seconde horloge H2 est donc initialisé à zéro.

De cette manière, après le rétablissement de l'alimentation électrique principale G1, les deux horloges H1, H2 repartent en étant parfaitement synchronisées.

Selon l'invention, la seconde horloge H2 peut également être synchronisée grâce à des moyens externes en utilisant un réseau de communication. Cette synchronisation peut être réalisée entre plusieurs automates d'un même réseau de terrain ou à partir d'une information extérieure transmise via un réseau par exemple de type Internet.

Il est bien entendu que l'on peut, sans sortir du cadre de l'invention, imaginer d'autres variantes et perfectionnements de détail et de même envisager l'emploi de moyens équivalents.

## Revendications

1. Méthode de gestion du temps mise en oeuvre dans un équipement d'automatisme, à partir d'un système qui comprend :
- une première horloge (H1) ayant un premier compteur (C1) fonctionnant sur une première base de temps,
- une seconde horloge (H2) ayant un deuxième compteur (C2) fonctionnant sur une deuxième base de temps identique à la première base de temps et un troisième compteur (C3) fonctionnant sur une troisième base de temps inférieure à la deuxième base de temps,
- une alimentation électrique principale (G1) pour alimenter la première et la seconde horloges,
- une alimentation électrique auxiliaire (G2) pour alimenter la première horloge (H1) en cas de coupure de l'alimentation électrique principale,
- effectuer une synchronisation périodique entre le premier compteur (C1) et le deuxième compteur (C2), et
ladite méthode de gestion du temps étant **caractérisée en ce qu'**elle consiste à :
- effectuer une resynchronisation de la seconde horloge (H2) lors du rétablissement de l'alimentation électrique principale (G1), cette resynchronisation consistant à détecter une modification du premier compteur (C1), à charger le premier compteur (C1) dans le second compteur (C2) et à initialiser à zéro le troisième compteur (C3) lors de la modification du premier compteur (C1).

2. Méthode selon la revendication 1, **caractérisée en ce que** la première horloge (H1) est un composant matériel de type RTC.

3. Méthode selon la revendication 1 ou 2, **caractérisée en ce que** la première base de temps est la seconde.

4. Méthode selon l'une des revendications 1 à 3, **caractérisée en ce que** la seconde horloge (H2) est incrémentée par logiciel.

5. Méthode selon l'une des revendications 1 à 4, **caractérisée en ce que** la troisième base de temps est la milliseconde.

6. Méthode selon l'une des revendications 1 à 5, **caractérisée en ce que** l'alimentation électrique auxiliaire (G2) est une capacité.

7. Méthode selon l'une des revendications 1 à 6, **caractérisée en ce que** la synchronisation périodique est réalisée sur la base du second compteur (C2) de là seconde horloge (H2).

8. Système de gestion du temps dans un équipement d'automatisme comprenant :
- une première horloge (H1) ayant un premier compteur (C1) fonctionnant sur une première base de temps,
- une seconde horloge (H2) ayant un deuxième compteur (C2) fonctionnant sur une deuxième base de temps identique à la première base de temps et un troisième compteur (C3) fonctionnant sur une troisième base de temps inférieure à la deuxième base de temps,
- des moyens pour synchroniser périodiquement le deuxième compteur (C2) et le premier compteur (C1),
- une alimentation électrique principale (G1) pour alimenter la première et la seconde horloges (H1, H2),
- une alimentation électrique auxiliaire (G2) pour alimenter la première horloge (H1) en cas de coupure de l'alimentation électrique principale (G1),
- des moyens pour effectuer une resynchronisation de la seconde horloge (H2) après la fin d'une coupure de l'alimentation électrique principale,
- et **caractérisé en ce qu'**il comprend :
des moyens consistant à détecter lors de ladite resynchronisation une modification du premier compteur (C1), à charger le premier compteur (C1) dans le second compteur (C2) et à initialiser à zéro le troisième compteur (C3) lors de la modification du premier compteur (C1).

9. Système selon la revendication 8, **caractérisé en ce que** la première horloge (H1) est un composant matériel de type RTC.

10. Système selon la revendication 8 ou 9, **caractérisé en ce que** la première base de temps est la seconde.

11. Système selon l'une des revendications 8 à 10, **caractérisé en ce que** la seconde horloge (H2) est commandée par logiciel.

## Patentansprüche

1. Methode zur Verwaltung der Einsatzzeit in einer Automatisierungsvorrichtung auf Basis eines Systems, umfassend:
- eine erste Uhr (H1) mit einem ersten Zähler (C1), der auf einer ersten Zeitbasis funktioniert,
- eine zweite Uhr (H2) mit einem zweiten Zähler (C2), der auf einer zweiten Zeitbasis identisch mit der ersten Zeitbasis funktioniert, und einen dritten Zähler (C3), der auf einer dritten Zeitbasis, die kleiner als die zweite Zeitbasis ist, funktioniert,
- eine elektrische Hauptversorgung (G1), um die erste und die zweite Uhr zu versorgen,
- eine elektrische Nebenversorgung (G2), um die erste Uhr (H1) im Falle einer Unterbrechung der elektrischen Hauptversorgung zu versorgen,
- wobei eine periodische Synchronisierung zwischen dem ersten Zähler (C1) und dem zweiten Zähler (C2) durchgeführt wird, und
wobei die Methode zur Zeitverwaltung **dadurch gekennzeichnet ist, dass** sie darin besteht:
- eine Resynchronisierung der zweiten Uhr (H2) bei der Wiederherstellung der elektrischen Hauptversorgung (G1) durchzuführen, wobei diese Resynchronisierung darin besteht, eine Veränderung des ersten Zählers (C1) zu erfassen, den ersten Zähler (C1) in den zweiten Zähler (C2) zu laden und den dritten Zähler (C3) bei der Änderung des ersten Zählers (C1) mit Null zu initialisieren.

2. Methode nach Anspruch 1, **dadurch gekennzeichnet, dass** die erste Uhr (H1) eine materielle Komponente des Typs RTC ist.

3. Methode nach Anspruch 1 oder 2, **dadurch gekennzeichnet, dass** die erste Zeitbasis die zweite ist.

4. Methode nach einem der Ansprüche 1 bis 3, **dadurch gekennzeichnet, dass** die zweite Uhr (H2) durch eine Software inkrementiert wird.

5. Methode nach einem der Ansprüche 1 bis 4, **dadurch gekennzeichnet, dass** die dritte Zeitbasis die Millisekunde ist.

6. Methode nach einem der Ansprüche 1 bis 5, **dadurch gekennzeichnet, dass** die elektrische Hilfsversorgung (G2) eine Kapazität ist.

7. Methode nach einem der Ansprüche 1 bis 6, **dadurch gekennzeichnet, dass** die periodische Synchronisierung auf Basis des zweiten Zählers (C2) der zweiten Uhr (H2) erfolgt.

8. System zur Zeitverwaltung in einer Automatisierungsvorrichtung, umfassend:
- eine erste Uhr (H1) mit einem ersten Zähler (C1), der auf einer ersten Zeitbasis funktioniert,
- eine zweite Uhr (H2) mit einem zweiten Zähler (C2), der auf einer zweiten Zeitbasis identisch mit der ersten Zeitbasis funktioniert, und einen dritten Zähler (C3), der auf einer dritten Zeitbasis, die kleiner als die zweite Zeitbasis ist, funktioniert,
- Mittel, um den zweiten Zähler (C2) und den ersten Zähler (C1) periodisch zu synchronisieren,
- eine elektrische Hauptversorgung (G1), um die erste und die zweite Uhr (H1, H2) zu versorgen,
- eine elektrische Nebenversorgung (G2), um die erste Uhr (H1) im Falle einer Unterbrechung der elektrischen Hauptversorgung (G1) zu versorgen,
- Mittel, um eine Resynchronisierung der zweiten Uhr (H2) nach dem Ende einer Unterbrechung der elektrischen Hauptversorgung durchzuführen,
und **dadurch gekennzeichnet, dass** es umfasst:
- Mittel, die darin bestehen, bei der Resynchronisierung eine Änderung des ersten Zählers (C1) zu erfassen, den ersten Zähler (C1) in den zweiten Zähler (C2) zu laden und den dritten Zähler (C3) bei der Änderung des ersten Zählers (C1) mit Null zu initialisieren.

9. System nach Anspruch 8, **dadurch gekennzeichnet, dass** die erste Uhr (H1) eine materielle Komponente des Typs RTC ist.

10. System nach Anspruch 8 oder 9, **dadurch gekennzeichnet, dass** die erste Zeitbasis die zweite ist.

11. System nach einem der Ansprüche 8 bis 10, **dadurch gekennzeichnet, dass** die zweite Uhr (H2) durch eine Software gesteuert wird.

## Claims

1. Time management method implemented in automatic control equipment, based on a system which comprises:
- a first clock (H1) having a first counter (C1) operating on a first timebase,
- a second clock (H2) having a second counter (C2) operating on a second timebase identical to the first timebase, and a third counter (C3) operating on a third timebase less than the second timebase,
- a main electrical power supply (G1) for powering the first and second clocks,
- an auxiliary electrical power supply (G2) for powering the first clock (H1) in the event of a main electrical power supply outage,
- a periodic synchronization being performed between the first counter (C1) and the second counter (C2), and
said time management method being **characterized in that** it consists in:
- performing a resynchronization of the second clock (H2) when the main electrical power supply (G1) is restored, this resynchronization consisting in detecting a modification of the first counter (C1), in loading the first counter (C1) into the second counter (C2) and in zeroing the third counter (C3) during the modification of the first counter (C1).

2. Method according to Claim 1, **characterized in that** the first clock (H1) is a hardware component of RTC type.

3. Method according to Claim 1 or 2, **characterized in that** the first timebase is the second.

4. Method according to one of Claims 1 to 3, **characterized in that** the second clock (H2) is incremented by software.

5. Method according to one of Claims 1 to 4, **characterized in that** the third timebase is the millisecond.

6. Method according to one of Claims 1 to 5, **characterized in that** the auxiliary electrical power supply (G2) is a capacitor.

7. Method according to one of Claims 1 to 6, **characterized in that** the periodic synchronization is performed on the basis of the second counter (C2) of the second clock (H2).

8. Time management system in automatic control equipment, comprising:
- a first clock (H1) having a first counter (C1) operating on a first timebase,
- a second clock (H2) having a second counter (C2) operating on a second timebase identical to the first timebase and a third counter (C3) operating on a third timebase less than the second timebase,
- means for periodically synchronizing the second counter (C2) and the first counter (C1),
- a main electrical power supply (G1) for powering the first and second clocks (H1, H2),
- an auxiliary electrical power supply (G2) for powering the first clock (H1) in the event of an outage of the main electrical power supply (G1),
- means for performing a resynchronization of the second clock (H2) after the end of a main electrical power supply outage,
and **characterized in that** it comprises:
- means that consist in detecting, during said resynchronization, a modification of the first counter (C1), in loading the first counter (C1) into the second counter (C2) and in zeroing the third counter (C3) during the modification of the first counter (C1).

9. System according to Claim 8, **characterized in that** the first clock (H1) is a hardware component of RTC type.

10. System according to Claim 8 or 9, **characterized in that** the first timebase is the second.

11. System according to one of Claims 8 to 10, **characterized in that** the second clock (H2) is controlled by software.
